(19) Europäisches Patentamt / European Patent Office / Office européen des brevets

(11) **EP 1 992 906 A1**

(12) **DEMANDE DE BREVET EUROPEEN**

(43) Date de publication:
**19.11.2008 Bulletin 2008/47**

(51) Int Cl.:
**G01B 11/02** *(2006.01)*

(21) Numéro de dépôt: **08155634.2**

(22) Date de dépôt: **05.05.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **16.05.2007 FR 0755114**

(71) Demandeur: **Commissariat A L'Energie Atomique - CEA**
**75015 Paris (FR)**

(72) Inventeurs:
• **Rougeault, Stéphane**
  **92330, SCEAUX (FR)**
• **Ferdinand, Pierre**
  **78800, HOUILLES (FR)**
• **Laffont, Guillaume**
  **78390, BOIS D'ARCY (FR)**

(74) Mandataire: **Ilgart, Jean-Christophe**
**BREVALEX**
**3, rue du Docteur Lancereaux**
**75008 Paris (FR)**

(54) **Extensomètre a réseau de bragg et dispositif de mesure comportant au moins un tel extensomètre**

(57) La présente invention a principalement pour objet un capteur de déplacement d'un objet, au moins un corps d'épreuve (13) comprenant au moins un support monolithique, et au moins un réseau de Bragg , formé dans conducteur optique solidaire dudit support, ledit corps d'épreuve (13) étant sollicité axialement dans son domaine d'élasticité, le support (12) étant solidarisé par une première extrémité à une partie fixe du capteur et par une deuxième extrémité à une partie mobile du capteur destinée à être solidarisé audit objet, et des moyens (14) aptes à transmettre à la deuxième extrémité du support (12) le déplacement de l'objet avec une amplitude réduite par rapport à une amplitude de déplacement dudit objet, lesdits moyens étant interposés entre la deuxième extrémité du support (12) et ledit objet pour permettre au capteur de déplacement de suivre le déplacement dudit objet.

La présente invention a également pour objet un dispositif comportant trois capteurs selon l'invention, utilisable notamment pour mesurer le déplacement de fil de contact portés par une ligne caténaire d'alimentation de locomotives.

FIG.2A

EP 1 992 906 A1

**Description**

**DOMAINE TECHNIQUE ET ART ANTÉRIEUR**

La présente invention se rapporte à un extensomètre à réseau de Bragg pour mesurer des déplacements dynamiques, et à un dispositif de mesure de déplacement dynamiques en trois dimensions.

Une application d'un tel dispositif selon l'invention peut être la mesure du déplacement d'un fil de contact porté par une ligne caténaire lors du passage d'un train.

Un extensomètre destiné à mesurer notamment un déplacement et utilisant un réseau de Bragg est connu du document EP 0 867 688. Celui-ci comporte une fibre optique portant un réseau de Bragg tendue entre une pièce fixe et une pièce mobile par l'intermédiaire d'un ressort. La fibre optique forme une boucle par laquelle elle est fixée sous tension à une pièce mécanique mobile.

L'équation d'équilibre d'un tel système dépendant uniquement des caractéristiques mécaniques de la fibre (section, longueur et module d'Young), le ressort permettant un tel équilibre a un coefficient faible, le système est donc très sensible aux frottements qui produisent une hystérésis. De plus, la fibre étant montée sur une poulie, ce système ne permet pas des mesures dynamiques rapides à cause de l'inertie mécanique.

Il existe également un extensomètre décrit dans le document FR 2 850 745 pour la mesure de déplacements, où le mouvement d'une pièce mobile est démultiplié par une lame de flexion sur laquelle est fixée une fibre optique munie d'un réseau de Bragg. La pièce mobile vient frotter sur une face de la lame de flexion et la déforme en flexion. Or, du fait des frottements entre les pièces mobiles, ce dispositif n'est pas non plus adapté à la mesure de déplacements dynamiques rapides.

Par ailleurs, dans le cadre des transports ferroviaires, l'alimentation électrique de la motrice d'un train s'effectue au moyen d'une succession de caténaires disposées au-dessus des voies et auxquelles la motrice se raccorde électriquement par un pantographe portant un patin venant frotter sur le fil de contact porté par une ligne caténaire. Lors du passage du train, le fil de contact est soulevé de plusieurs centimètres par le pantographe. La mesure et la connaissance de ce déplacement sont particulièrement importantes, et permet de détecter, par exemple, un éventuel défaut du patin et d'en déduire son état d'usure. En outre, ces mesures peuvent permettre de valider des modélisations de comportement d'une caténaire. Dans ce cas, on recherche un dispositif de mesure de déplacements en trois dimensions, qui ne soit pas sensible à de fortes perturbations électromagnétiques provoquées par les courants à haute tension.

Actuellement, seule la mesure du déplacement vertical du fil de contact de la ligne caténaire est effectuée à l'aide de potentiomètres reliés au fil de contact par un câble isolant.

C'est par conséquent un but de la présente invention d'offrir un extensomètre à réseau de Bragg, et plus généralement un capteur de déplacement à réseau de Bragg permettant d'effectuer des mesures de déplacement dynamiques rapides, selon une ou plusieurs directions.

**EXPOSÉ DE L'INVENTION**

Le but précédemment énoncé est atteint par un capteur comportant un réseau de Bragg porté par une fibre optique solidaire d'un corps d'épreuve, une extrémité du corps d'épreuve étant destinée à être fixée à une partie fixe et une extrémité du corps d'épreuve étant destinée à être solidaire d'un objet dont on souhaite mesurer le déplacement, et des moyens de réduction convertissant l'amplitude du déplacement de l'objet en une amplitude de déplacement réduite de l'extrémité du corps d'épreuve destinée à être reliée à l'objet.

En d'autres termes, on déforme directement un ensemble constitué par le corps d'épreuve formé par la fibre optique et son support, cet ensemble ayant des caractéristiques mécaniques (section, longueur et module d'Young) ajustables permettant le choix d'un ressort de coefficient de raideur plus fort que dans le cas de l'utilisation d'une fibre nue, ce qui minimise l'effet des frottements sur la mesure.

Cet extensomètre permet la mesure de déplacement dans une direction de l'espace qui est la direction longitudinale selon laquelle est sollicité le corps d'épreuve.

L'association de deux extensomètres selon l'invention permet de réaliser des mesures de déplacement dans un plan ; et l'association de trois extensomètres selon l'invention permet de mesurer des déplacements dans l'espace.

L'extensomètre de l'invention permet des mesures précises, rapides, sans hystérésis, avec une bonne répétabilité, sur une dynamique jusqu'à environ 20 Hz. Ce dispositif opto-mécanique peut être installé dans un environnement présentant de fortes perturbations électromagnétiques. Par exemple, il peut être appliqué à la mesure du déplacement de lignes caténaires sous haute tension lors du passage d'un train.

La présente invention a alors principalement pour objet un capteur de déplacement d'un objet, ledit capteur comportant une première extrémité destinée à être fixe et une deuxième extrémité apte à se déplacer le long d'un axe longitudinal du capteur de déplacement, au moins un corps d'épreuve comprenant au moins un support monolithique et au moins un réseau de Bragg, ce réseau de Bragg étant formé dans un conducteur optique qui est rendu solidaire dudit support, ledit corps d'épreuve étant destiné à être sollicité axialement dans son domaine d'élasticité, ledit support étant solidarisé par une première extrémité à une partie fixe du capteur de déplacement et par une deuxième extrémité à une partie mobile du capteur de déplacement destinée à être solidarisé audit objet, et des moyens aptes à transmettre à la deuxième extrémité du support le déplacement de l'objet avec une amplitude réduite par rapport à une amplitude de déplacement dudit objet, lesdits moyens étant interposés entre la deuxième extrémité du support et ledit objet de réduction du déplacement de ladite deuxième extrémité du support pour permettre au capteur de déplacement de suivre le déplacement dudit objet.

Le conducteur optique est avantageusement une fibre optique et le réseau de Bragg fonctionne en réflexion, une extrémité de la fibre optique débouchant uniquement du côté de la partie fixe du capteur de déplacement.

Les moyens aptes à transmettre un déplacement à la deuxième extrémité du corps d'épreuve peuvent comporter un ressort hélicoïdal d'axe longitudinal fixé d'une part à la partie mobile et d'autre part à une pièce coulissante destinée à être solidaire de l'objet.

Dans un exemple de réalisation, le corps d'épreuve a la forme d'une lame, par exemple en clinquant de cuivre, sur laquelle la partie du conducteur optique dans laquelle est inscrit le réseau de Bragg est collée. Le support peut alors être fixé par vissage sur les parties mobile et fixe.

Dans un autre exemple de réalisation, le support a la forme d'un tube, par exemple en acier, dans lequel la partie du conducteur optique dans laquelle est inscrit le réseau de Bragg est collée, formant un corps d'épreuve. Chaque extrémité du tube formant le support peut alors être fixée par serrage entre deux mâchoires sur les parties fixe et mobile.

La partie fixe comporte avantageusement un alésage axial pour le passage du conducteur optique qui est guidé dans un tube en direction d'une extrémité du capteur de déplacement destinée à être fixe et dans lequel la partie mobile est reliée à une première extrémité du ressort par une tige intermédiaire, une deuxième extrémité du ressort étant fixée à une tige apte à coulisser, destinée à se raccorder à l'objet dont on souhaite mesurer le déplacement.

De manière avantageuse, le capteur de déplacement comporte à chacune de ses extrémités longitudinales une liaison rotule, pour permettre un débattement angulaire de celui-ci, notamment lorsqu'il est associé à un ou deux autres capteurs pour la mesure de déplacements bi ou tridimensionnels respectivement. Par exemple, la liaison rotule est obtenue par un élément de rotule sphérique offrant un débattement d'environ $\pm$ 10°.

La présente invention a également pour objet un dispositif de mesure de déplacement comportant au moins un capteur de déplacement selon la présente invention, dans lequel ledit capteur de déplacement est destiné à être fixé entre une partie fixe et un objet mobile dont on souhaite mesurer le déplacement.

La longueur du ressort est avantageusement déterminée de manière à ce que le ressort soit sous tension sur toute la course de déplacement de l'objet, lorsque le capteur de déplacement est relié à l'objet et à un élément fixe de référence.

Dans un mode de réalisation avantageux, le dispositif de mesure comporte trois capteurs de déplacement disposés de manière à ce que leurs extrémités mobiles soient concourantes en un point et leurs extrémités fixes soient disposées sous la forme d'un triangle équilatéral, le dispositif ayant la forme d'un tétraèdre régulier. Ce dispositif permet alors la mesure de déplacements tridimensionnels.

La présente invention a également pour objet un dispositif de mesure du déplacement d'un fil de contact porté par une ligne caténaire comportant un dispositif selon la présente invention, ledit dispositif étant destiné à être suspendu à un mât au-dessus d'une ligne caténaire et isolé électriquement dudit mât, le point concourant étant destiné à être fixé au fil de contact porté par ladite ligne caténaire.

**BRÈVE DESCRIPTION DES DESSINS**

La présente invention sera mieux comprise à l'aide de la description qui va suivre et des dessins en annexe, sur lesquels :

- la figure 1 est une représentation schématique d'un extensomètre selon la présente invention,
- la figure 2A est une vue extérieure d'un exemple de réalisation d'un extensomètre selon la présente invention,
- la figure 2B est une vue en coupe longitudinale de l'extensomètre de la figure 2A,
- la figure 3A est une vue schématique en perspective d'un dispositif de mesure de déplacement tridimensionnel selon la présente invention,
- la figure 3B est une vue de côté d'une réalisation du dispositif de mesure de déplacement tridimensionnel de la figure 3A,
- la figure 4 est une vue en perspective d'un exemple d'implantation d'un dispositif de mesure de déplacement à trois dimensions mis en oeuvre pour la mesure de déplacement de fil de contact pour alimentation électrique de train, ledit fil de contact étant porté par une ligne caténaire,
- la figure 5 est une représentation du phénomène de soulèvement d'un fil de contact porté par une ligne caténaire au passage d'un train,

- la figure 6 est une vue de dessus d'une implantation proche de celle de la figure 4, dans laquelle une extrémité fixe d'un des extensomètres se trouve dans un plan vertical contenant la ligne caténaire,
- la figure 7 est une vue de dessus de l'implantation de la figure 4, aucune extrémité fixe d'un des extensomètres ne se trouvant dans un plan vertical contenant la ligne caténaire,
- la figure 8A est une vue de dessus d'un support de corps d'épreuve en forme de lame,
- la figure 8B est une vue de côté d'un corps d'épreuve dont le support de la fibre à réseau de Bragg est en forme de microtube,
- la figure 9 représente une vue en coupe du système de fixation de l'extensomètre sur le fil de contact.

## EXPOSÉ DÉTAILLÉ DE MODES DE RÉALISATION PARTICULIERS

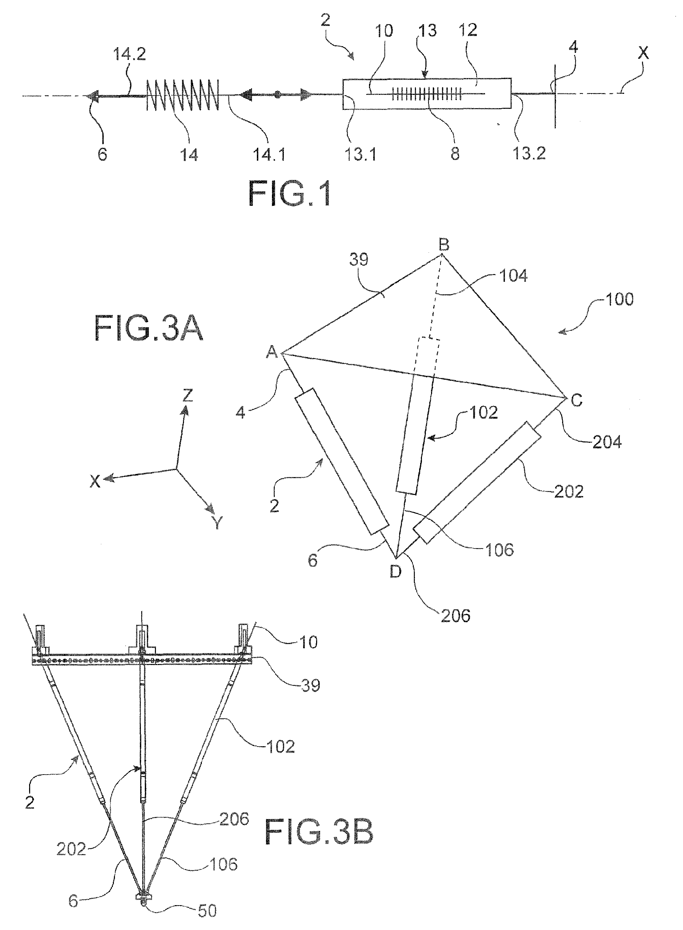

Sur la figure 1, on peut voir un schéma de principe d'un extensomètre 2 selon la présente invention d'axe longitudinal X, comportant une première extrémité 4 destinée à être fixée à une partie fixe et une extrémité mobile 6 destinée à être fixée à un objet mobile (non représenté) dont on souhaite mesurer le déplacement.

L'extensomètre comporte entre ses deux extrémités 4, 6 un réseau de Bragg 8 formé dans un conducteur optique 10, par exemple une fibre optique et un support 12, extensible en longueur et duquel est solidaire la fibre optique 10. Dans la suite du document l'ensemble support 12 et fibre optique 10 à réseau de Bragg 8 sera appelé corps d'épreuve 13.

Le support 12 est monolithique et peut être formé par exemple d'une lame ou d'un tube comme cela sera décrit par la suite.

L'extensomètre comporte également un moyen élastique 14 reliant le corps d'épreuve 13 à l'objet dont on souhaite mesurer le déplacement.

Ce moyen élastique est, dans l'exemple représenté formé par un ressort hélicoïdal relié par première extrémité longitudinale 14.1 à une première extrémité 13.1 du corps d'épreuve et par une deuxième extrémité longitudinale 14.2 à l'objet.

Le corps d'épreuve 13 est relié par une deuxième extrémité longitudinale 13.2 à la partie fixe.

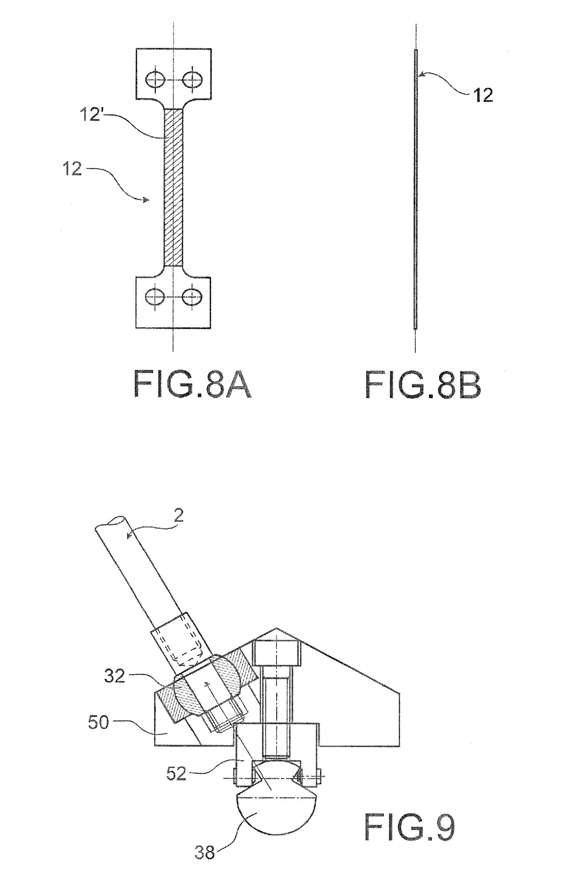

Le support 12 peut avoir la forme d'une lame allongée, par exemple en clinquant de cuivre, la fibre optique étant collée sur l'une de ses faces. Sur la figure 8A, la zone hachurée 12' correspond à la zone de collage de la fibre optique sur le support 12.

De manière avantageuse, le support 12 est un microtube, par exemple en acier, dans lequel est collée la fibre optique. Cette dernière réalisation est particulièrement avantageuse, car elle réduit le risque de décollage de la fibre du support et de sa perte. La colle entre le support et la fibre est répartie de manière homogène pour éviter les irrégularités dans la transmission des contraintes subies par le support au réseau de Bragg via la fibre optique, ce qui induirait une déformation de la réponse spectrale du réseau de Bragg, préjudiciable à la mesure.

A titre d'exemple les dimensions d'un support ayant la forme d'une éprouvette en clinquant de cuivre sont : longueur 2 cm, largeur 2 mm, épaisseur 0.1 mm avec un module d'Young de 123 MPa. Et les dimensions d'un support ayant la forme d'un tube d'acier sont : longueur 2 cm, diamètre extérieur 0.5 mm, diamètre intérieur 0.3 mm avec un module d'Young de 200 MPa.

Le ressort 14 permet de réduire l'amplitude du déplacement transmis à l'extrémité 13.1 du corps d'épreuve 13 pour permettre à l'extensomètre, en particulier à sa deuxième extrémité 6 de suivre le déplacement de l'objet sans rompre la fibre optique.

En effet, avec ce type d'extensomètre, on cherche à mesurer des déplacements de plusieurs centimètres, or la limite d'élasticité de la fibre optique est d'environ 1 %. Par conséquent, la déformation de la fibre optique, et donc celle du corps d'épreuve ne sont pas suffisantes pour permettre de suivre les déplacements de l'objet sans détériorer l'extensomètre, en particulier la fibre optique et le réseau de Bragg.

En d'autres termes, le ressort 14 réduit le déplacement nécessaire de la première extrémité 13.1 du corps d'épreuve.

Le choix des dimensions, notamment de la section du support de la fibre (lame ou tube) et le choix de son matériau s'effectuent en fonction de la raideur du ressort, puisque le corps d'épreuve composé de la fibre et de son support est destiné à compenser l'effort exercé par le ressort.

L'équation d'équilibre du système formé par le ressort 14 et le corps d'épreuve 13 est la suivante :

$$k.(Lr + \delta Lr) - Se.Ee.\frac{\delta Le}{Le} = 0 \qquad [0]$$

dans laquelle :

k coefficient de raideur du ressort en daN/m,

Lr longueur du ressort en m,

δLr allongement du ressort en m,

Se surface du corps d'épreuve en m², Se = Sf + Ss

Sf surface de la fibre optique en m²,

Ss surface du support en m²,

Ee module d'Young du corps d'épreuve,

$$Ee = \frac{Ef.Sf + Es.Ss}{Sf.Ss}$$

Ef module d'Young de la fibre,

Es module d'Young du support,

Le longueur du corps d'épreuve en m,

δ Le allongement du corps d'épreuve en m,

δ L allongement à mesurer,

$\dfrac{\delta Le}{Le} = \varepsilon$ allongement relatif du corps d'épreuve mesuré par le réseau de Bragg en μm/m,

$\dfrac{\Delta \lambda}{\lambda}$ variation relative de longueur d'onde du réseau de Bragg,

a coefficient d'allongement du réseau (environ 1 pm/(μm/m)),

$$\text{Soit}\quad k.\left(Lr + \delta Lr\right) - SeEe.\varepsilon = 0 \qquad [1]$$

$$\delta L = \delta Lr + \delta Le \qquad [2]$$

A partir de [1], on obtient en fonction de la longueur du ressort :

$$\varepsilon\left(\delta Lr\right) = k.\frac{Lr + \delta Lr}{Se.Ee} \qquad [3]$$

ε est désormais écrit ε(δ*Lr*) car il est fonction de (δ*Lr*).

Par ailleurs, la variation relative de longueur d'onde est donnée par l'équation suivante :

$$\frac{\Delta \lambda}{\lambda} = a.\varepsilon\left(\delta Lr\right) \qquad [4]$$

Le principe de fonctionnement d'un capteur à réseau de Bragg est le suivant. Nous nous plaçons dans le cas d'un réseau de Bragg fonctionnant en réflexion.

On envoie un signal lumineux de large bande spectrale dans la fibre optique munie d'un réseau de Bragg. Un réseau de Bragg est une zone de perturbation périodique de l'indice de réfraction du coeur d'une fibre optique qui joue le rôle d'un filtre spectral étroit. Les contraintes axiales exercées sur la fibre, notamment son allongement, provoque une variation de la période du réseau de Bragg qui induit un changement de longueur d'onde du signal lumineux réfléchi. On peut donc théoriquement déterminer l'allongement du corps d'épreuve à partir de la relation [4]. Cependant, dans la pratique toutes les caractéristiques mécaniques des éléments du système, notamment celles de la colle utilisée pour fixer la fibre optique sur le support, ne sont pas connues ou mal connues. Par conséquent, il est nécessaire d'effectuer un étalonnage.

Dans le cas particulier de l'extensomètre selon la présente invention comportant un ressort 14, on tient compte de la déformation du ressort 14 pour déterminer le déplacement de l'objet à partir de la déformation du réseau de Bragg. Pour cela, on utilise un modèle de ce système mécanique et/ou une procédure d'étalonnage permettant d'établir une correspondance entre le décalage de la longueur d'onde du faisceau réfléchi par le réseau de Bragg, l'allongement relatif de la fibre optique et du réseau de Bragg et l'allongement absolu du ressort, ce qui permet d'en déduire le déplacement axial de l'extrémité mobile 6 de l'extensomètre, et donc le déplacement de l'objet.

De manière avantageuse, il peut être prévu un ou plusieurs réseaux de Bragg de compensation thermique.

Pour compenser l'effet de la température sur ce réseau de Bragg 8, nous utilisons un autre réseau de Bragg collé dans/sur un support identique au réseau de Bragg de mesure mais non soumis à la déformation induite par le ressort. Par exemple le réseau de Bragg de température, photo-inscrit sur la même fibre, peut être maintenu dans le tube qui se prolonge en dehors de la zone d'allongement dans la tige intermédiaire 26. Cependant le comportement thermique de l'ensemble de l'extensomètre étant très difficile à modéliser, la compensation thermique ne pourra pas se faire par une simple soustraction des réponses du réseau de Bragg de mesure de déplacement et du réseau de Bragg de mesure de température. Un étalonnage en température est requis et la compensation thermique se fera alors par connaissance de la température obtenue par le réseau de température.

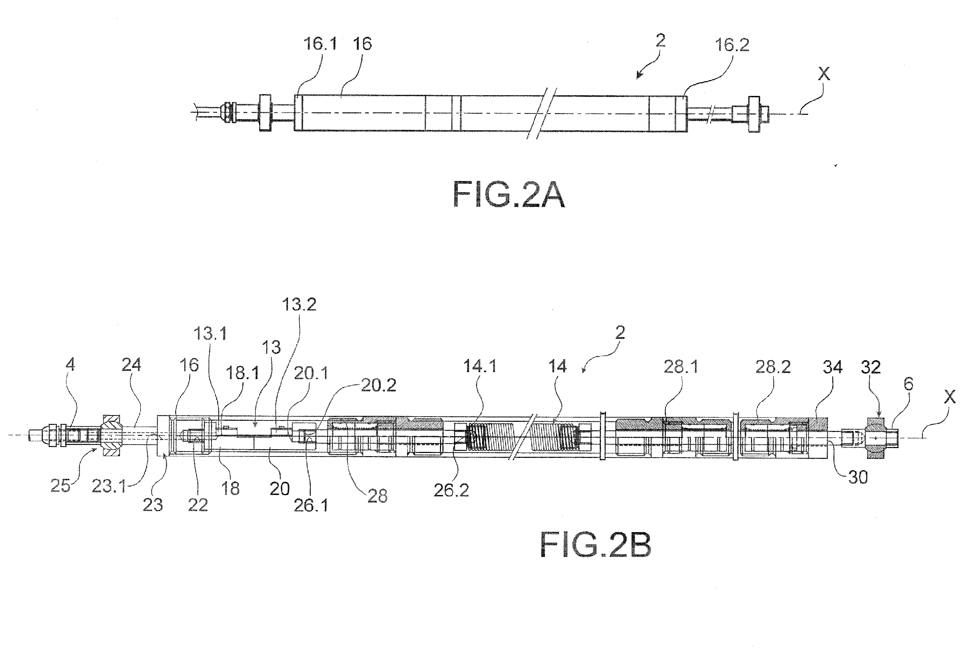

Sur les figures 2A et 2B, on peut voir un exemple de réalisation d'un extensomètre selon la présente invention, notamment destiné à être mis en oeuvre dans un dispositif de mesure de déplacement tridimensionnel d'un fil de contact porté par une ligne caténaire.

L'extensomètre 2 d'axe longitudinal X comporte une enveloppe 16 en forme de manchon duquel sortent au niveau de ses extrémités axiales les parties d'extrémité 4, 6 de l'extensomètre destinées à la fixation à la partie fixe et à la partie mobile respectivement.

L'extensomètre comporte un support fixe 18 et un support mobile 20 reliés respectivement aux parties d'extrémités 4, 6.

Les supports sont deux cylindres coaxiaux, percés pour le passage de la fibre, sur lesquels sont usinés deux méplats face à face 18.1 et 20.1 pouvant recevoir les extrémités du corps d'épreuve, plus particulièrement du support 12 par vissage dans le cas d'un support plat, comme une lame ou par serrage et collage par une pièce comportant une rainure en V dans le cas d'un tube.

Le support mobile 20 est apte à se déplacer selon l'axe X par rapport à la partie fixe 18.

Dans le cas d'un support 12 en forme de lame, tel qu'illustré en figure 8A, celui-ci est par exemple fixé par des vis.

Dans le cas d'un support 12 tubulaire, tel qu'illustré en figure 8B, celui-ci est par exemple fixé par collage et/ou par serrage entre deux mâchoires.

Le support fixe 18 comporte un alésage 22 d'axe X pour le passage de la fibre optique 10.

L'extensomètre comporte également un élément 23 vissé sur la périphérie extérieure du support fixe 18 et formant un bouchon pour obturer l'extrémité 16.1 du manchon d'enveloppe 20.

Ce bouchon 23 comporte un alésage central 23.1 pour le passage de la fibre optique 10, et se prolonge par un tube 24 guidant la fibre optique jusqu'à un dispositif d'émission d'un signal lumineux et de réception du signal lumineux réfléchi et de traitement de celui-ci (non représenté).

Dans l'exemple représenté, un élément formant une rotule sphérique 25 est prévu à l'extrémité du tube 24 afin de permettre une liaison rotule ; cette liaison rotule est particulièrement intéressante dans le cas d'un dispositif de mesure de déplacement tridimensionnel qui sera décrit ci-après.

De manière avantageuse, un presse étoupe est également prévu à l'extrémité 4 de l'extensomètre pour permettre un passage étanche de la fibre optique.

Dans l'exemple représenté, le réseau de Bragg fonctionne en réflexion, ainsi le signal émis entre et le signal réfléchi sort par la même extrémité de la fibre optique, ce qui réduit le diamètre de l'extensomètre. On pourrait cependant utiliser un réseau de Bragg fonctionnant en transmission, la fibre optique pourrait alors par exemple former une boucle, les deux extrémités de la fibre débouchant du côté de l'extrémité fixe 4 de l'extensomètre par deux câbles, permettant un montage de plusieurs extensomètres en série. Cependant un tel montage nécessiterait l'utilisation d'une fibre peu sensible aux pertes par courbure et une augmentation du diamètre de l'extensomètre pour permettre de loger la boucle de fibre et les deux sorties de câble.

Le support mobile 20 est, quant à lui, relié au ressort 14 au moyen d'une tige intermédiaire 26 par exemple vissée par une première extrémité longitudinale filetée 26.1 dans un alésage fileté dans la partie cylindrique 20.2 du support mobile 20. La première extrémité 14.1 du ressort 14 est fixée sur une deuxième extrémité 26.2 de la tige intermédiaire 26.

Une tige 30 est prévue entre une deuxième extrémité 14.2 du ressort 14 et l'extrémité 6 de l'extensomètre.

Le ressort 14 peut être fixé aux pièces 26 et 30 par collage, soudure ou vissage sur un filetage au pas du ressort sur les pièces 26 et 30.

Trois bouchons porte douille à billes 28, 28.1 et 28.2 sont avantageusement prévus autour de la partie médiane de la tige intermédiaire 26 et aux extrémités de la tige 30 pour un guidage axial optimum évitant tout désaxage des tiges de transmission.

La deuxième extrémité 14.2 du ressort 14 est fixée de manière identique à une tige mobile 30 axialement.

La tige mobile 30 s'étend jusqu'à l'extrémité 6 de l'extensomètre au niveau duquel un élément formant rotule sphérique 32 est prévu. Ce montage sur rotule permet un suivi de déplacement triaxial, comme nous le verrons par la suite.

Un bouchon 34 est prévu autour de la tige mobile 30 pour obturer de manière étanche la deuxième extrémité 16.2 du manchon d'enveloppe 16.

La tige mobile 30 est alors apte à coulisser axialement dans le bouchon 34.

Sur la figure 3, on peut voir un dispositif 100 de mesure de déplacement tridimensionnel comportant trois extensomètres 2, 102, 202 selon la présente invention. Chaque extrémité fixe 4, 104, 204 de chaque extensomètre 2, 102, 202 est fixée sur une chape 39, de telle manière qu'elles délimitent un triangle de préférence équilatéral ABC et les extrémités mobiles 6, 106, 206 se rejoignent en un point unique D pour délimiter un tétraèdre. Le point D est alors solidaire en mouvement de l'objet. Le point D est formé par une pièce conique 50 d'angle au sommet égal à celui du tétraèdre constitué par les trois extensomètres et percé de 3 alésages à 120° permettant le logement des trois rotules 32.

Sur la figure 9, on voit un exemple de système de fixation de l'extrémité du tétraèdre déformable, comprenant une pièce conique 50 fixée au fil de contact par un cavalier 52 muni de vis à bout conique.

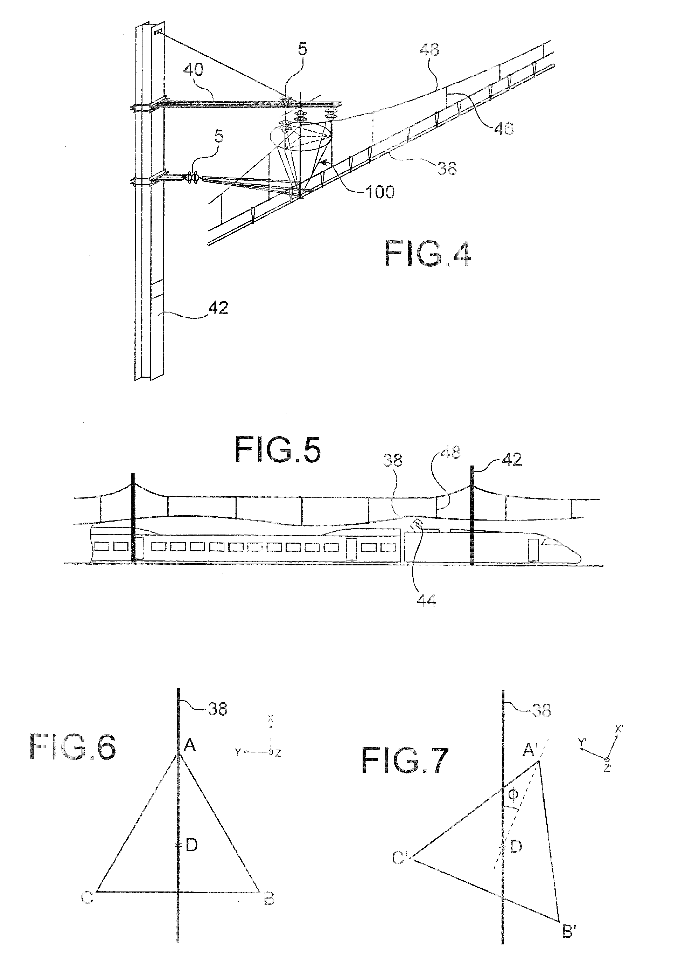

Sur la figure 4, on peut voir un exemple d'implantation de ce dispositif sur une ligne d'alimentation d'un train.

Le câble porteur 48 est suspendu à des bras 40 sensiblement horizontaux fixés à des poteaux 42 espacés de 50 à 80 m suivant les implantations. Il suit une courbe qu'on appelle chaînette. Le fil de contact 38 est suspendu au câble porteur 48 par l'intermédiaire de pendules coulissants 46 espacés de 5 à 10 m suivant les implantations de manière à être horizontal.

La chape 39 du dispositif à trois extensomètres est suspendue au bras 40 au moyen d'isolateurs 41, par exemple en verre ou céramique pour maintenir l'isolation électrique entre la ligne caténaire sous haute tension et le poteau, comme ceci est prévu sur les installations de l'état de la technique. Par ailleurs, la fibre optique n'étant pas conductrice et sa gaine de protection étant également prévue isolante électriquement, l'isolation électrique est effectivement réalisée ; ce qui ne serait pas le cas dans le cas de capteurs électriques, la récupération des données s'effectuant par des câbles conducteurs électriques, une telle isolation ne serait pas possible.

Le dispositif de mesure selon la présente invention présente également l'avantage de ne pas être sensible aux perturbations électromagnétiques provoquées par la haute tension de l'alimentation.

Par ailleurs, à l'état de référence du dispositif de mesure, les ressorts 14 sont tendus et sont en équilibre avec le poids du fil de contact. Au passage du train le pantographe soulève le fil de contact sans être perturbé par la présence du dispositif de mesure.

Le montage à rotules des extrémités 4, 6, 104, 106, 204, 206 de chaque extensomètre, qui est de l'ordre de $\pm$ 10°, permet à ceux-ci de suivre le déplacement dans toutes les directions de l'objet, le tétraèdre se déforme alors en suivant l'objet.

Le ressort est monté en traction entre la tige intermédiaire 26 et la tige mobile 30. Ainsi, dans le cas de la mesure du déplacement d'une caténaire par le passage d'un train, celle-ci est principalement soulevée comme cela est représenté sur la figure 5 par un pantographe 44.

A titre uniquement d'exemple, dans le cas d'un dispositif de mesure de déplacement d'un fil de contact porté par une ligne caténaire, on souhaite pouvoir mesurer des déplacements jusqu'à 200 mm, i.e. la tige 30 peut effectuer une course de 200 mm. La longueur de l'enveloppe 16 est d'environ 600 mm et le diamètre de celle-ci est de 18 mm.

Nous allons expliquer le fonctionnement de ce dispositif en relation avec les figures 4 et 5.

Lorsqu'un train passe au niveau du dispositif de mesure selon la présente invention, son pantographe soulève le fil de contact auquel est relié le dispositif de mesure par l'extrémité D, ce qui provoque une déformation des trois extensomètres 2, 102, 202, plus précisément un coulissement de chaque tige mobile 30 dans l'enveloppe de chacun des extensomètres 2, 102, 202.

Ce coulissement détend le ressort 14, qui relâche une contrainte axiale au corps d'épreuve 13, la fibre optique se déforme de manière sensiblement identique, cette déformation provoque une déformation du réseau de Bragg.

La caténaire n'ayant pas un déplacement parfaitement vertical, les trois extensomètres ne sont pas sollicités de manière identique. La variation des longueurs d'onde entre les faisceaux lumineux émis et réfléchis dans chacune des fibres optiques permet alors après traitement et comparaison au moyen, par exemple d'un étalonnage, de déterminer la variation des coordonnées du point D mobile pendant le déplacement de la caténaire.

Le déplacement de la caténaire sous l'action du pantographe peut alors en être déduit. A partir de ce déplacement, il est possible par exemple de savoir si le patin de contact porté par le pantographe est usé ou de modéliser le déplacement de la caténaire pour une vitesse donnée du train.

Nous allons décrire à titre uniquement d'exemple les différents paramètres à prendre en compte pour définir la structure d'un dispositif de mesure de déplacement d'une caténaire.

Le choix des caractéristiques de l'extensomètre est tout d'abord guidé par la gamme de mesure de déplacement fonction de l'application. Dans l'exemple d'un dispositif de mesure de déplacement d'une caténaire, celle-ci est généralement comprise entre 0 et 200 mm. On prévoit cependant que la caténaire puisse se déplacer vers le bas, i.e. en dessous de sa position au repos. Les extensomètres étant conçus pour être sollicités en extension, en effet les ressorts 14 ne sont, au repos, tendus qu'à environ 75 %, afin de conserver une marge de manoeuvre de déplacement des tiges 30 vers l'extérieur.

Par ailleurs, entre également en ligne de compte la gamme spectrale finale du réseau de Bragg en fonction du système de mesure et de la topologie d'implantation des capteurs, en série ou en parallèle, celle-ci peut être comprise entre 0 nm et 1 nm.

Par ailleurs, la géométrie du support du corps d'épreuve (éprouvette plate ou microtube), définissant la section Se et son matériau (par exemple clinquant de cuivre ou acier), définissant le module d'Young Ee sont deux paramètres particulièrement contraignants, qui sont directement dépendants des caractéristiques mécaniques de la fibre optique.

Par ailleurs, on souhaite réaliser un dispositif ayant un encombrement spatial réduit, notamment on souhaite réaliser des extensomètres ayant un diamètre maximal réduit, qui impose alors le diamètre du ressort 14. Dans l'exemple considéré, on cherche un diamètre de ressort compris entre 10 mm et 12 mm.

Par ailleurs, on souhaite que le dispositif de mesure soit le moins intrusif possible, i.e. qu'il n'intervienne pas dans le déplacement de l'objet que l'on souhaite mesurer. Par conséquent, la force de rappel est choisie inférieure à une valeur déterminée en fonction de l'application. Dans l'exemple décrit, la force de rappel du ressort est souhaitée inférieure à 2 daN.

On cherche alors un ressort de traction apte à réaliser un extensomètre remplissant les conditions ci-dessus. Pour cela, nous allons déterminer le nombre de spires du ressort :

En utilisant les ressorts disponibles dans le commerce, on choisit un ressort ayant :

un diamètre extérieur De de 12 mm.
un diamètre de fil d de 1 mm.

On calcule alors le diamètre moyen Dm servant au calcul de la charge du ressort Dm = De - d = 11 mm.

On peut alors écrire :

$$k = \frac{Gd^4}{8Dm^3 n} \qquad\qquad [5]$$

n étant le nombre de spires.

La raideur k est choisie égale à 100 N/m pour notre application.

G étant le module d'élasticité à la torsion (Module de Coulomb ou de glissement), celui-ci est pris égal à 80 GPa.

On peut alors calculer n le nombre de spires à partir de [5] pour obtenir la raideur équivalente :

$$n = \frac{Gd^4}{8Dm^3 k} \qquad\qquad [6]$$

On obtient alors avec les valeurs numériques données plus haut un nombre de spires égal à 110, soit une longueur L du ressort donné par la relation :

$$L = d.(n-1) \qquad\qquad [7]$$

L est alors égal à 109 mm.

Par ailleurs, nous allons déterminer la limite d'utilisation d'un ressort.

Pour avoir un ordre de grandeur de cette déformation maximale, nous calculons l'angle $\alpha$ entre deux spires, $\alpha$ est alors donné par :

$$\alpha = 2.\arcsin\left(\frac{\dfrac{d}{2} + \dfrac{e}{2}}{Dm}\right).\frac{180}{\pi}$$

[8]

e étant la distance entre chaque spire.

e est donnée par la relation :

$$e = \frac{Lv\_Lch}{n-1}$$

[9]

Lv étant la longueur à vide du ressort, et

Lch étant la longueur en charge du ressort.

Il a été calculé par ailleurs, que de manière générale il est préférable que $\alpha$ soit inférieur à environ 16° pour éviter toute déformation plastique du ressort.

Le ressort ainsi déterminé remplit cette condition puisque dans notre cas particulier $\alpha = 7$.

Dans l'exemple représenté, chaque extensomètre offre un poids réduit de 600 g et un diamètre extérieur faible de 18 mm. Leur encombrement est donc faible et les extensomètres peuvent être appliqués facilement.

Par ailleurs, les extensomètres peuvent être utilisés jusqu'à une fréquence au moins égale à 20 Hz.

Il est bien entendu que l'on peut réaliser un dispositif de mesure comportant deux extensomètres selon la présente invention, ce qui permet la mesure de déplacement selon deux dimensions. L'orientation relative des extensomètres dépend de l'implantation, ils peuvent être orientés à 90° l'un de l'autre ou former un angle plus faible ou plus grand.

Dans le cas particulier du dispositif représenté sur la figure 4 de mesure du déplacement d'une caténaire, il est avantageusement prévu de pouvoir orienter le tétraèdre, notamment sa base fixe pour éviter que l'un des extensomètres n'entre en contact avec le câble porteur 48 visibles sur la figure 4. Pour cela, le triangle équilatéral de base est tourné d'un angle suffisant par exemple 30° par rapport à la caténaire, pour permettre le passage des capteurs entre le porteur principal 48 et le fil de contact.

Nous allons maintenant calculer les coordonnées de point D sommet du tétraèdre de base horizontale A, B, C. Tout d'abord nous définissons un repère XYZ dont le centre 0 se trouve dans le plan du triangle de base A, B, C (cf. figure 6). De manière préférentielle le triangle A, B, C est équilatéral inscrit dans un cercle de rayon R. Les coordonnées des points A, B, C sont les suivantes :

$$A = \begin{pmatrix} R \\ 0 \\ 0 \end{pmatrix} \qquad B = \begin{pmatrix} \dfrac{-R}{2} \\ R \cdot \dfrac{\sqrt{3}}{2} \\ 0 \end{pmatrix} \qquad C = \begin{pmatrix} \dfrac{-R}{2} \\ -R \cdot \dfrac{\sqrt{3}}{2} \\ 0 \end{pmatrix}$$

Les trois capteurs extensométriques 2, 102, 204 de longueurs respectives L1, L2, L3, connues au moment du montage du tétraèdre, étant montés respectivement sur les points A, B, C, et le point commun D par résolution de l'équation des trois sphères on obtient les coordonnées du sommet du tétraèdre désigné par D :

$$yD = \frac{L3^2 - L2^2}{2 \cdot \sqrt{3} \cdot R}$$

$$xD = \frac{1}{3 \cdot R} \cdot \left( \frac{L3^2 + L2^2}{2} - L1^2 \right)$$

$$zD = \sqrt{\frac{L1^2 + L2^2 + L3^2}{3} - R^2 - \frac{1}{9 \cdot R^2} \cdot \left( L3^4 + L2^4 + L1^4 - L1^2 \cdot L2^2 - L1^2 \cdot L3^2 - L2^2 \cdot L3^2 \right)}$$

Nous allons maintenant calculer les coordonnées de D dans le cas d'une rotation du triangle de base énoncé plus haut, tel que représenté à la figure 7. Pour cela on définit un nouveau repère X'Y'Z' par rotation de l'angle φ, l'axe X' passant par le sommet du triangle sur lequel s'attache C1. On calcule les coordonnées de x'D, y'D et z'D du sommet du tétraèdre dans le nouveau repère à partir des longueurs respectives L1, L2, L3, comme précédemment. Puis on calcule les coordonnées xD, yD et zD de D dans le repère XYZ grâce à la matrice de rotation de la manière suivante :

$$\begin{pmatrix} xD \\ yD \\ zD \end{pmatrix} = \begin{pmatrix} x'D \\ y'D \\ z'D \end{pmatrix} \cdot \begin{pmatrix} \cos(\phi) & \sin(\phi) & 0 \\ -\sin(\phi) & \cos(\phi) & 0 \\ 0 & 0 & 1 \end{pmatrix}$$

On obtient alors

$$xD = x'D.\cos(\phi) + y'D. - \sin(\phi) + z'D.0$$

$$yD = x'D.\sin(\phi) + y'D.\cos(\phi) + z'D.0$$

$$zD = x'D.0 + y'D.0 + z'D.1$$

Nous avons donc bien réalisé un capteur de déplacement capable de mesurer des déplacements dynamiques rapides et présentant l'avantage d'être peu sensible à de fortes perturbations électromagnétiques. Celui-ci peut alors avantageusement être mis en oeuvre pour la mesure de déplacements de fils de contact sur des caténaires d'alimentation de motrice de train.

**Revendications**

1. Capteur de déplacement d'un objet, ledit capteur comportant une première extrémité (4) destinée à être fixe et une deuxième extrémité (6) apte à se déplacer le long d'un axe longitudinal (X) du capteur de déplacement, au moins un corps d'épreuve (13) comprenant au moins un support monolithique (12), et au moins un réseau de Bragg (8), ce réseau de Bragg (8) étant formé dans un conducteur optique (10) qui est rendu solidaire dudit support (12), ledit corps d'épreuve (13) étant destiné à être sollicité axialement dans son domaine d'élasticité, ledit support (12) étant solidarisé par une première extrémité à une partie fixe (18) du capteur de déplacement et par une deuxième extrémité à une partie mobile (20) du capteur de déplacement destinée à être solidarisée audit objet, et des moyens (14) aptes à transmettre à la deuxième extrémité du support (12) le déplacement de l'objet avec une amplitude réduite par rapport à une amplitude de déplacement dudit objet, lesdits moyens (14) étant interposés entre la deuxième extrémité du support (12) et ledit objet pour permettre au capteur de déplacement de suivre le déplacement dudit objet.

**2.** Capteur de déplacement selon la revendication 1, dans lequel le conducteur optique (10) est une fibre optique et le réseau de Bragg (8) fonctionne en réflexion, une extrémité de la fibre optique (10) débouchant uniquement du côté de la partie fixe (18) du capteur de déplacement.

**3.** Capteur de déplacement selon la revendication 1 ou 2, dans lequel les moyens (14) aptes à transmettre un déplacement à la deuxième extrémité du corps d'épreuve comportent un ressort hélicoïdal d'axe longitudinal fixé d'une part à la partie mobile (20) et d'autre part à une pièce coulissante (30) destinée à être solidaire de l'objet.

**4.** Capteur de déplacement selon l'une des revendications 1 à 3, dans lequel le support (12) a la forme d'une lame, par exemple en clinquant de cuivre, sur laquelle la partie du conducteur optique (10) dans laquelle est inscrit le réseau de Bragg (8) est collée.

**5.** Capteur de déplacement selon la revendication 4, dans lequel le support (12) est fixé par vissage sur les parties mobile (20) et fixe (18).

**6.** Capteur de déplacement selon l'une des revendications 1 à 3, dans lequel le support (12) a la forme d'un tube, par exemple en acier, dans lequel la partie du conducteur optique (10), dans laquelle est inscrite le réseau de Bragg (8) est collée formant un corps d'épreuve (13).

**7.** Capteur de déplacement selon la revendication 6, dans lequel chaque extrémité du tube formant le support (12) est fixée par serrage entre deux mâchoires sur les parties fixe (18) et mobile (20).

**8.** Capteur de déplacement selon l'une des revendications 1 à 7 en combinaison avec la revendication 3, dans lequel la partie fixe (18) comporte un alésage axial (22) pour le passage du conducteur optique (10) qui est guidé dans un tube (24) en direction d'une extrémité du capteur de déplacement destinée à être fixe et dans lequel la partie mobile (20) est reliée à une première extrémité du ressort (14) par une tige intermédiaire (26), une deuxième extrémité du ressort (14) étant fixée à une tige mobile axialement (30) destinée à se raccorder à l'objet dont on souhaite mesurer le déplacement.

**9.** Capteur de déplacement selon l'une des revendications 1 à 8, comportant à chacune de ses extrémités longitudinales une liaison rotule (25, 32).

**10.** Capteur de déplacement selon la revendication 9, dans lequel la liaison rotule (35, 32) est obtenue par un élément de rotule sphérique offrant un débattement d'environ $\pm$ 10°.

**11.** Dispositif de mesure de déplacement comportant au moins un capteur de déplacement selon l'une quelconque des revendications précédentes, dans lequel ledit capteur de déplacement est destiné à être fixé entre une partie fixe et un objet mobile dont on souhaite mesurer le déplacement.

**12.** Dispositif selon la revendication 11, dans lequel la longueur du ressort (14) est déterminée de manière à ce que le ressort (14) soit sous tension sur toute la course du déplacement de l'objet, lorsque le capteur de déplacement est relié à l'objet et à un élément fixe de référence.

**13.** Dispositif de mesure selon l'une des revendications 11 à 12, comportant trois capteurs de déplacement (2, 102, 202) disposés de manière à ce que leurs extrémités mobiles soient concourantes en un point (D) et leurs extrémités fixes soient disposées sous la forme d'un triangle équilatéral (ABC), le dispositif ayant la forme d'un tétraèdre.

**14.** Dispositif de mesure du déplacement du fil de contact d'une ligne caténaire comportant un dispositif selon la revendication 13, ledit dispositif étant destiné à être suspendu à un mât au-dessus d'une ligne caténaire et isolé électriquement dudit mât, le point concourant (D) étant destiné à être fixé au fil de contact porté par ladite ligne caténaire.

**FIG.1**

**FIG.3A**

**FIG.3B**

FIG.2A

FIG.2B

FIG.4

FIG.5

FIG.6

FIG.7

FIG.8A

FIG.8B

FIG.9

**Office européen**

**des brevets**

**RAPPORT DE RECHERCHE EUROPEENNE**

Numéro de la demande

EP 08 15 5634

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 124 112 A (NTT ADVANCED TECH KK [JP]; TOKYO SOKKI KENKYUJO CO LTD [JP]) 16 août 2001 (2001-08-16) * alinéa [0030] - alinéa [0047] * * revendication 1 * * figure 2 * | 1,2,11 | INV. G01B11/02 |
| Y | | 3-10, 12-14 | |
| Y | US 2005/183499 A1 (BIESTER KLAUS [DE] ET AL) 25 août 2005 (2005-08-25) * le document en entier * | 3 | |
| D,Y | EP 0 867 688 A2 (GLOETZL BAUMESSTECH [DE]) 30 septembre 1998 (1998-09-30) * le document en entier * | 1-14 | |
| D,Y | FR 2 850 745 A1 (COMMISSARIAT ENERGIE ATOMIQUE [FR]) 6 août 2004 (2004-08-06) * le document en entier * ----- | 1-14 | |

DOMAINES TECHNIQUES RECHERCHES (IPC)

G01B
G01D

Le présent rapport a été établi pour toutes les revendications

| Lieu de la recherche | Date d'achèvement de la recherche | Examinateur |
|---|---|---|
| Munich | 3 septembre 2008 | Grand, Jean-Yves |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 15 5634

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-09-2008

| Document brevet cité au rapport de recherche | | Date de publication | Membre(s) de la famille de brevet(s) | | Date de publication |
|---|---|---|---|---|---|
| EP 1124112 | A | 16-08-2001 | CA<br>JP<br>JP<br>US | 2334333 A1<br>3519333 B2<br>2001221615 A<br>2001019103 A1 | 10-08-2001<br>12-04-2004<br>17-08-2001<br>06-09-2001 |
| US 2005183499 | A1 | 25-08-2005 | AUCUN | | |
| EP 0867688 | A2 | 30-09-1998 | DE<br>ES | 19712407 A1<br>2229406 T3 | 01-10-1998<br>16-04-2005 |
| FR 2850745 | A1 | 06-08-2004 | CA<br>EP<br>WO<br>US | 2514802 A1<br>1588124 A1<br>2004070314 A1<br>2006159385 A1 | 19-08-2004<br>26-10-2005<br>19-08-2004<br>20-07-2006 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0867688 A
- FR 2850745